# EUROPÄISCHE PATENTSCHRIFT

(11) **EP 1 778 446 B1**
(45) Veröffentlichungstag und Bekanntmachung des Hinweises auf die Patenterteilung: **21.03.2012**
(21) Anmeldenummer: 05772923.8
(22) Anmeldetag: 08.08.2005
(51) Int. Cl.: B28C 5/42, F16F 1/40, F16F 1/44

(54) **ANTRIEB FÜR EINE MISCHTROMMEL**
DRIVE FOR A MIXING DRUM
ENTRAINEMENT POUR TAMBOUR MELANGEUR

(30) Priorität: 07.08.2004 DE 102004038504; 07.08.2004 DE 102004038506; 01.12.2004 DE 102004057849
(43) Veröffentlichungstag der Anmeldung: 02.05.2007
(73) Patentinhaber: ZF Friedrichshafen AG, 88038 Friedrichshafen (DE)
(72) Erfinder: HEILIG, Eduard, 88048 Friedrichshafen (DE); GEIER, Andreas, 94118 Jandelsbrunn (DE); SCHIFFNER, Klaus, 53474 Bad Neuenahr-Ahrweiler (DE); FRONDORF, Michael, 53783 Eitorf (DE)
(86) Internationale Anmeldenummer: PCT/EP2005/008584
(87) Internationale Veröffentlichungsnummer: WO 2006/015835

(56) Entgegenhaltungen:
- WO-A1-2006/015833
- WO-A1-2006/015834
- WO-A1-2006/015839
- DE-A1- 2 341 250
- DE-A1- 10 033 661
- DE-B- 1 182 125
- FR-A- 2 146 053
- GB-A- 543 123
- GB-A- 668 010

## Beschreibung

Die Erfindung bezieht sich auf einen Antrieb für eine Mischtrommel, Die Erfindung bezieht sich auf einen Antrieb für eine Mischtrommel, insbesondere eines Transportbeton-Fahrmischers, nach der im Oberbegriff von Anspruch 1 näher definierten Art.

Antriebe für Fahrmischer haben die Aufgabe, die Mischtrommel zu drehen, um in der Drehrichtung "Einziehen" das Mischgut in die Trommel zu befördern und in der Drehrichtung "Entleeren" das Mischgut aus der Trommel zu befördern. Des weiteren ist die Mischtrommel über zwei Lagerrollen am Heck des Fahrzeugs und über den Antrieb gelagert, so dass der Antrieb einen wesentlichen Teil der Gewichtskraft der Mischtrommel aufnehmen muß. Bei Fahrt in unebenem Gelände verwindet sich der Fahrzeugrahmen, so dass die Mischtrommel eine Relativbewegung zum Fahrzeugrahmen ausführt und diese Bewegung über den Antrieb ermöglicht bzw. ausgeglichen werden muß.

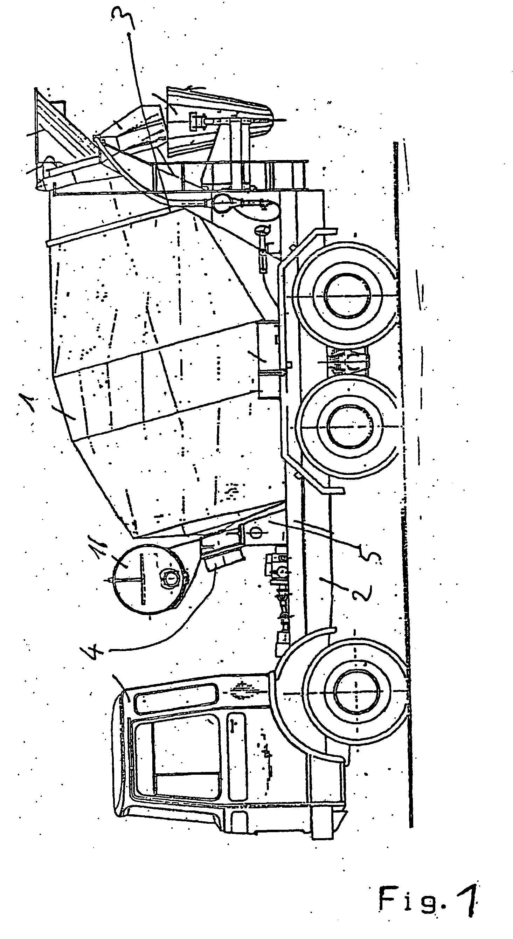

Die DE 100 33 66.1 A1 offenbart einen Antrieb für eine Mischtrommel, bei welchem ein hydraulischer Motor ein inneres Zentralrad eines Planetengetriebes antreibt, dessen äußeres Zentralrad den Abtrieb bildet und die Mischtrommel antreibt. Die Gewichtskraft der Mischtrommel wird über ein Wälzlager in ein Gehäuse eingeleitet. Eine Relativbewegung der Mischtrommel zum Fahrzeugrahmen bei Fahrt in unebenem Gelände wird beispielsweise in Fig. 1 über ein Pendelrollenlager ermöglicht.

DE 1182125 offenbart den Oberbegriff des Anspruchs 1.

Der vorliegenden Erfindung liegt die Aufgabe zugrunde, einen Antrieb für eine Mischtrommel zu schaffen, welcher Relativbewegungen zwischen der Mischtrommel und dem Fahrzeugrahmen ermöglicht und sich durch hohe Betriebssicherheit und Wartungfreiheit auszeichnet.

Die Aufgabe wird mit einem, auch die kennzeichnenden Merkmale des Hauptanspruchs aufweisenden, gattungsgemäßen Antrieb für eine Mischtrommel gelöst.

Erfindungsgemäß ist der Antrieb einerseits mit der Mischtrommel und andererseits mit einem Sockel verbunden, welcher ebenfalls mit dem Fahrzeugrahmen verbunden ist. Zwischen dem Sockel und dem Antrieb befindet sich ein elastisches Element, welches durch seine elastische Verformung die Relativbewegungen zwischen der Trommel und dem Fahrzeugrahmen ermöglicht bzw. ausgleicht. Zusätzlich weist der Antrieb mindestens ein Bauteil auf, welches eine Bewegung des Antriebs, durch welche sich der Antrieb vom Sockel entfernt, begrenzt. Dies verhindert ein Abheben des Antriebs vom Sockel, was beispielsweise auch durch wechselnde Drehmomentbelastung entstehen kann. Die Mittel zum Ermöglichen der Relativbewegung zwischen der Trommel und dem Fahrzeugrahmen wesenmehrere elastische Elemente auf, welche zwischen den Elementen angeordnet sind, die ein Abheben der Mischtrommel bzw. des Antriebs vom Sockel verhindern. Hierzu ist ein mit dem Antrieb verbundenes Bauteil U-förmig ausgebildet, um die elastischen Elemente aufzunehmen. Die elastischen Elemente, welche sich zwischen den Schenkeln des "U" befinden, sind von einem weiteren Bauteil unterbrochen, welches mit dem Sockel in Verbindung steht. Die Schenkel des "U" können so ausgebildet ein, dass die elastischen Elemente vorgespannt montiert werden können.

In einer weiteren Ausgestaltungsform können die elastischen Elemente durch Metallbauteile unterbrochen bzw. wechselsinnig mit diesen geschichtet angeordnet sein. Dadurch wird eine erhöhte Federsteifigkeit erreicht. Das Bauteil, welches die elastischen Elemente unterbricht und mit dem Sockel ortsfest verbunden oder mit diesem einstückig ausgebildet ist, weist kreisringförmige Ausnehmungen auf, in welche die elastischen Elemente eingelegt werden können. Zusätzllich weisen diese Bauteile eine radiale Anschlagfläche auf, an welcher ein weiteres elastisches Bauteil anliegt, und welches sich im U-förmigen Element, welches mit dem Antrieb verbunden ist, abstützt. Das Bauteil, welches die elastischen Elemente unterbricht und mit dem Sockel verbunden ist, weist weitere radiale Anschlagflächen auf, an welchen sich elastische Elemente abstützen und welche mit Laschen des Antriebs in Verbindung stehen, um Bewegungskräfte, insbesondere beim Abbremsen und Beschleunigen des Fahrzeugs, aufzunehmen. Indem der Antrieb gleichmäßig um einen Kreismittelpunkt angeordnete radiale Laschen aufweist, welche sich über elastische Elemente auf Anschlagflächen abstützen, ist es möglich, zwischen diesen radialen Laschen und den Anschlagflächen weitere Anschlagflächen vorzusehen, welche eine Verdrehung des Antriebs um den Mittelpunkt mechanisch begrenzen. Dadurch wird eine Verdrehbewegung um den Mittelpunkt mechnisch begrenzt und durch die U-förmigen Elemente ein Abheben des Antriebs vom Sockel verhindert. Durch diese Ausbildung des elastischen Elements ist es möglich, den weiteren Antrieb mit dem hydraulischen Motor und dem Untersetzungsgetriebe starr auszubilden, was eine einfache Lagerung mittels handelsüblicher Wälzlager, beispielsweise Kegelrollenlager, ermöglicht. Um den Antrieb mit dem elastischen Element kompakt auszuführen, ist es vorteilhaft, mindestens ein Planetengetriebe als Untersetzungsgetriebe zu verwenden, dessen inneres Zentralrad als Antrieb dient und dessen äußeres Zentralrad den Abtrieb bildet und die Trommel antreibt.

Insbesondere wird durch die Zwischenschaltung elastischer Elemente eine Entkopplung zwischen Fahrzeugrahmen und Trommelantrieb bzw. Trommel erreicht, wodurch Geräusche und Schwingungen gedämpft werden.

In einer weiteren Ausgestaltungform besteht die Möglichkeit, das elastische Element auf Rahmenhöhe anzuordnen, wodurch sich der Sockel verkürzt und der Antrieb verlängert wird.

Weitere Merkmale sind der Figuren-Beschreibung zu entnehmen.
Es zeigen:
- **Fig. 1**: einen Fahrmischer;
- **Fig. 2**: einen Antrieb mit einem Radialkolbenmotor;

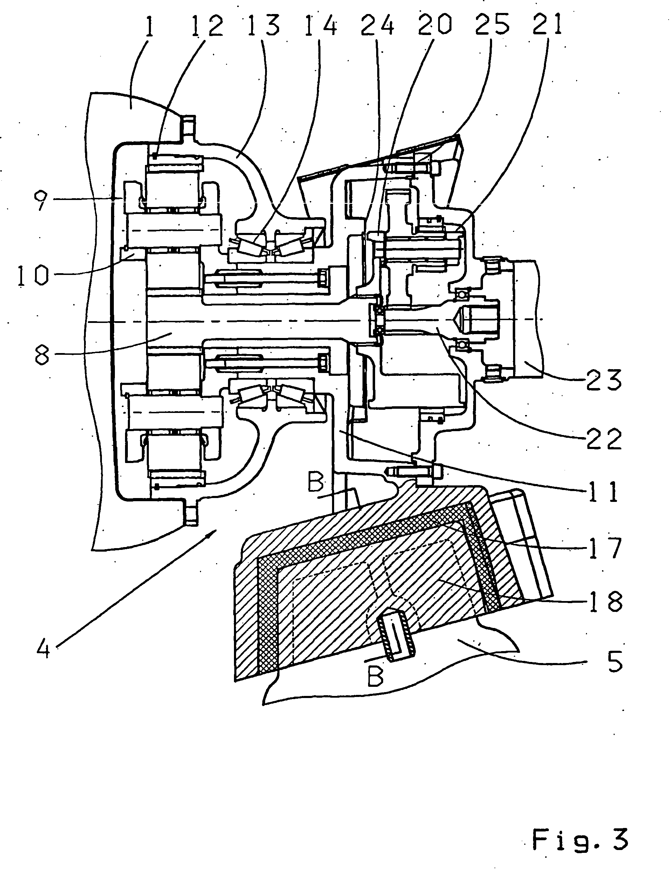

- **Fig. 3**: einen Antrieb zur Verwendung eines Axialkolbenmotors;
- **Fig. 4**: eine Darstlellung der Mittel zur Ermöglichung der Bewegung zwischen dem Sockel und dem Antrieb;

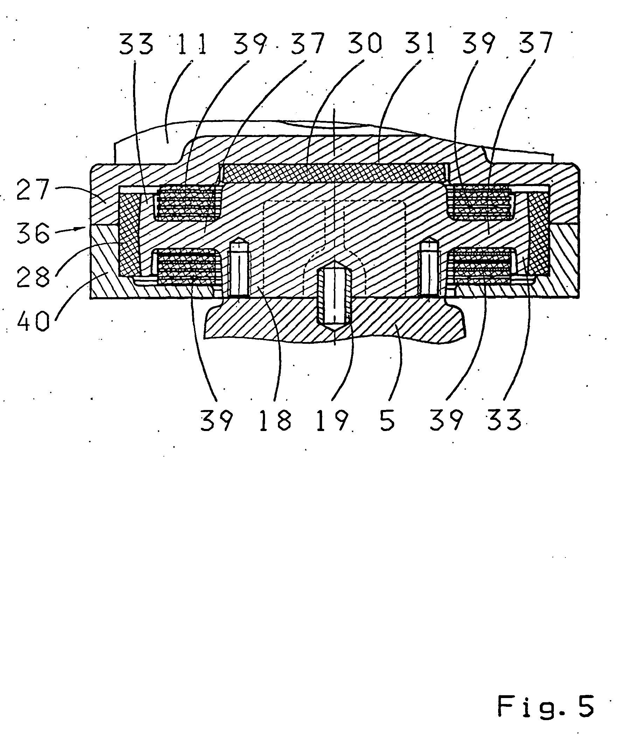

- **Fig. 5**: einen Schnitt durch diese Mittel;

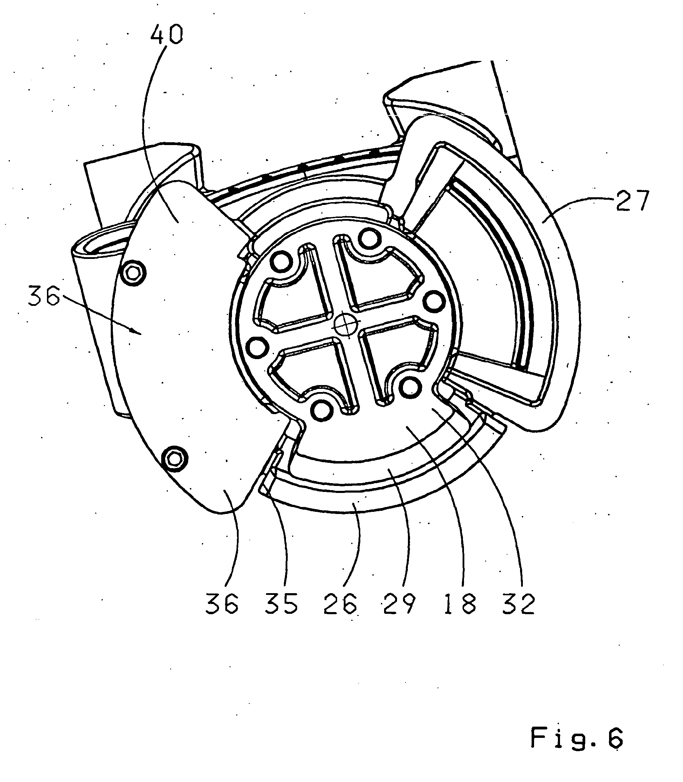

- **Fig. 6**: eine Unteransicht des Antriebs und

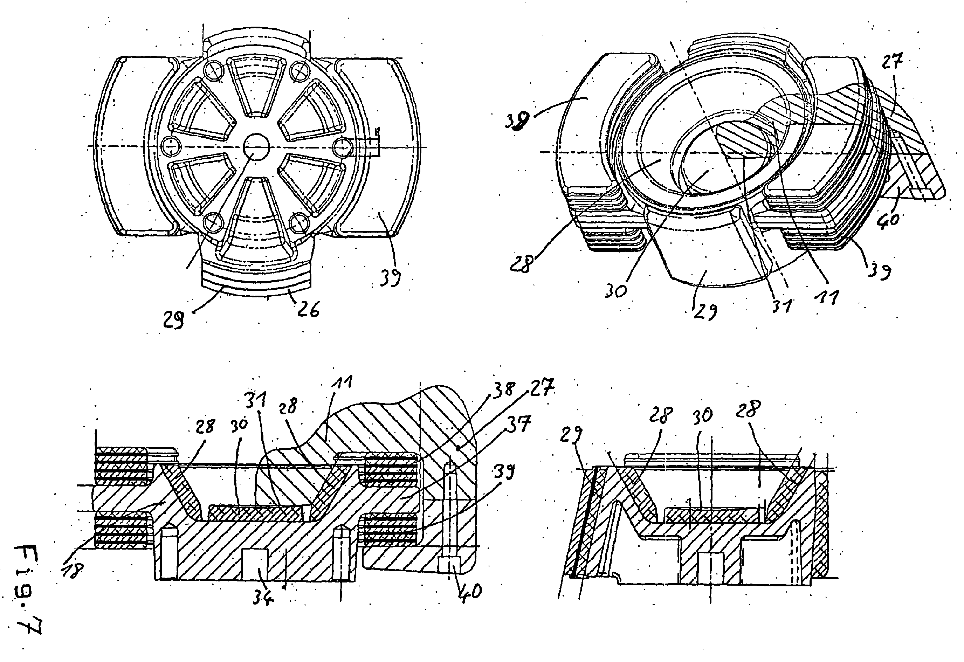

- **Fig. 7**: Darstellungen mit einer zentralen Kegelstumpfaufnahme für die elastischen Elemente.

### Fig. 1:

Eine Trommel 1 ist in einem Fahrzeugrahmen 2 einerseits über Lagerrollen 3 und andererseits über einen Antrieb für eine Mischtrommel 4 gelagert. Der Antrieb 4 ist auf einem Sockel 5 gelagert, wobei der Sockel 5 mit dem Rahmen 2 verbunden ist.

### Fig. 2:

Ein langsam laufender Radialkolbenmotor 6 treibt mit seinem Rotor 7 ein inneres Zentralrad 8 eines Planetengetriebes 9 an. Der Planetenträger 10 ist drehfest mit dem Gehäuse 11 verbunden. Das äußere Zentralrad 12 ist mit einem Abtriebsflansch 13 verbunden, welcher mit der Trommel 1 verbunden ist. Der Abtriebsflansch 13 ist über eine Lagerung 14, insbesondere eine Kegelrollenlagerung, auf dem Gehäuse 11 gelagert. Das Gehäuse 11 kann eine Trägerplatte 15 aufweisen, welche zur Aufnahme eines Wassertanks 16 geeignet ist. Der Antrieb 4 ist über ein elastisches Element 17 auf einem Bauteil 18 beweglich gelagert. Das Bauteil 18 ist mit dem Sockel 5 verbunden oder mit diesem einstückig ausgebildet. Das Bauteil 18 kann über eine zusätzliche mechanische Sicherung, beispielsweise einen Stift 19, im Sockel 5 gesichert sein.

### Fig. 3:

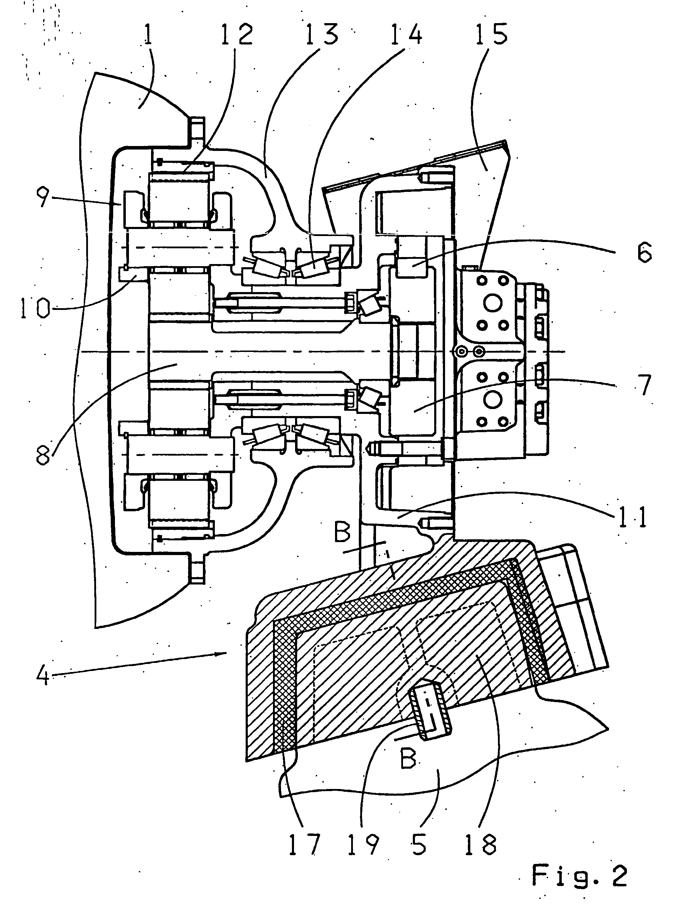

Der Antrieb 4 unterscheidet sich vom Antrieb nach Fig. 2 nur dadurch, dass das innere Zentralrad 8 vom Planetenträger 20 einer zweiten Planetenstufe 21 angetrieben wird, deren inneres Zentralrad 22 von einem Axialkolbenmotor 23 angetrieben wird. Es besteht auch die Möglichkeit, den Radialkolbenmotor 6 oder den Axialkolbenmotor 23 durch einen Elektromotor zu ersetzen. Das Gehäuse 11 weist zwei Anflanschflächen 24 und 25 auf, wobei die Anflanschfläche 24 zum Anflanschen eines Radialkolbenmotors 6 und die Anflanschfläche 25 zum Anflanschen eines Gehäusedeckels für die Planetenstufe 21 aus**gebildet ist.**

### Fig. 4:

Diese zeigt einen Ausschnitt der Mittel, welche eine Bewegung zwischen dem Sockel 5 und dem Antrieb 4 ermöglichen, in Explosionsdarstellung. Das Gehäuse 11 ist an seinem, dem Sockel 5 zugewandten Ende dergestalt ausgebildet, dass es zwei erste radiale Laschen 26 und zwei zweite radiale Laschen 27 aufweist. In die radialen Laschen 27 sind elastische Elemente 28 eingelegt. In die radialen Laschen 26 sind elastische Elemente 29 eingelegt, welche auch ein elastisches Element 30 aufweisen, welches am Boden 31 des Gehäuse 11 zur Anlage kommt Das Bauteil 18, welches mit dem Sockel 5 über Schraubverbindungen verbunden und zusätzlich über einen zentralen Stift 19 gesichert ist, weist Anschlagflächen 32, an welchen die elastischen Elemente 29 anliegen, und Anschlagflächen 33 auf, an welchen die elastischen Elemente 28 anliegen. Somit können alle Kräfte, welche aus der Abbremsung, der Beschleunigung oder einer Kurvenfahrt des Fahrzeugs entstehen, von den Laschen 26 und 27 über die elastischen Elemente 28 und 29 sowie 30 auf die Anschlagflächen 32 und 33 in das Bauteil 18 übertragen werden, um von dort in den Sockel 5 eingeleitet zu werden. Die Gewichtskraft der Trommel wird über den Boden 31, das elastische Element 30 in das Bauteil 18 eingeleitet. Bei einer Fahrt in unebenem Gelände verwindet sich der Fahzeugrahmen 2 und das Gehäuse 11 verdreht sich um den Mittelpunkt 34, was durch die elastischen Elemente ermöglicht wird. Durch die Anlage 35, welche am U-förmigen Element 36 zur Anlage kommen kann, wird die Verdrehung um den Mittelpunkt 34 mechanisch begrenzt. Das Bauteil 18 weist einen mittleren Steg 37 auf, welcher zusammen mit den Anschlagflächen 33 Ausnehmungen 38 formt, in welche elastische Elemente 39 eingelegt sind. Vorzugsweise sind die elastischen Elemente 39 welchselsinnig mit Metallelementen geschichtet, wodurch die Federsteifigkeit erhöht werden kann. Teile 40, welche vorzugsweise L-förmig ausgebildet sind, sind so mit den zweiten radialen Laschen 27 verbunden, dass sie zusammen mit diesen ein U-förmiges Element 36 bilden, innerhalb welchem die elastischen Elemente 39, der Steg 37, die Anschlagflächen 33 und die elastischen Elemente 28 angeordnet sind. Vorzugsweise ist das U-förmige Element 36 so ausgebildet, dass die elastischen Elemente 39 bei der Montage vorgespannt werden. Die U-förmigen Elemente 36 verhindern eine Verkippung des Antriebs 4, insbesondere beim Antrieb der Trommel, in einer Drehbewegung, da sich das Drehmoment zum Antrieb der Trommel über das Bauteil 18 im Sockel 5 abstützen kann. Ebenso verhindert das U-förmige Element 36 in Verbindung mit den elastischen Elementen 39 und dem Steg 37 ein Abheben des Gehäuses 4 vom Sockel 5, insbesondere bei wechselnden Drehmomentbelastungen.

In einer weiteren Ausgestaltungsform besteht die Möglichkeit, das Gehäuse 11 mit den radialen Laschen 26 und 27 auch mehrstückig auszubilden.

### Fig. 5:

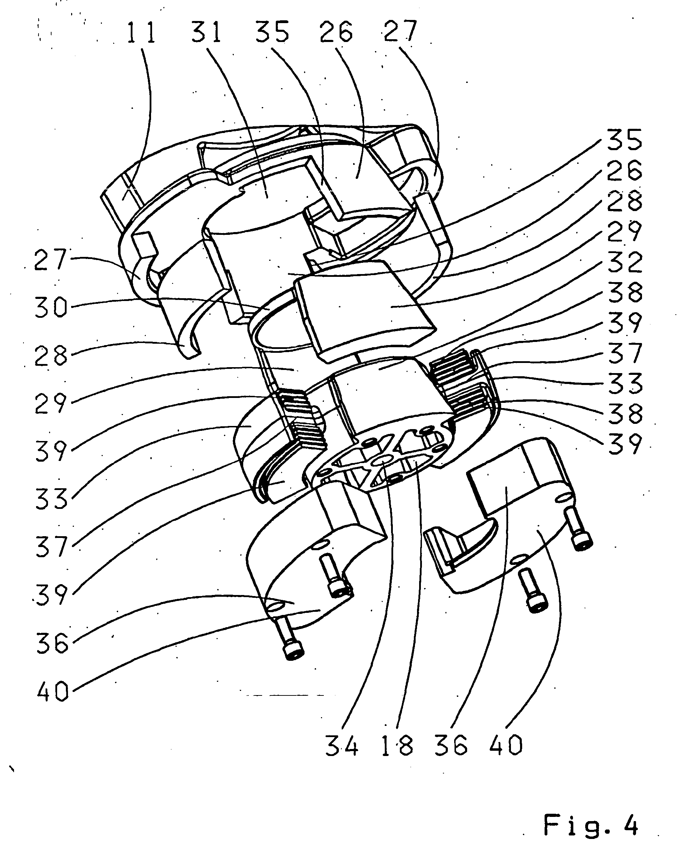

In dieser ist die Anordnung der Fig. 4 im montierten Zustand dargestellt.

### Fig. 6:

Die Anlage 35 der radialen Lasche 26 kann sich bis zur Anlage am U-förmigen Element 36 um den Mittelpunkt 34 verdrehen. Somit ist gewährleistet, dass bei Überbelastung der elastischen Elemente mechanische Anschläge bei der Verdrehung des Antriebs 4 zum Sockel 5 und mechanische Anschläge aus den Anschlagflächen 33 zum U-förmigen Element 36 bezüglich eines Abhebens des Antriebs 4 zum Sockel 5 vorhanden sind und somit eine Uberbelastung der elastischen Elemente verhindert wird.

Dadurch ist es möglich, einen wartungsfreien, einfach aufgebauten Antrieb für eine Mischtrommel zu schaffen, bei weichem die Lagerung 14 einfach aufgebaut sein kann, weil sie die Ausgleichsbewegungen zwischen der Trommel 1 und dem Rahmen 2 nicht ausführen muß und dadurch der Antrieb kompakt aufgebaut werden kann.

### Bezugszeichen

- 1: Trommel
- 2: Fahrzeugrahmen
- 3: Lagerrollen
- 4: Antrieb
- 5: Sockel
- 6: Radialkolbenmotor
- 7: Rotor
- 8: inneres Zentralrad
- 9: Planetengetriebe
- 10: Planetenträger
- 11: Gehäuse
- 12: äußeres Zentralrad
- 13: Abtriebsflansch
- 14: Lagerung
- 15: Trägerplatte
- 16: Wassertank
- 17: elastisches Element
- 18: Bauteil
- 19: Stift
- 20: Planetenträger
- 21: Planetenstufe
- 22: inneres Zentralrad
- 23: Axialkolbenmotor
- 24: Anflanschfläche
- 25: Anflanschfläche
- 26: erste radiale Laschen
- 27: zweite radiale Laschen
- 28: elastisches Element
- 29: elastisches Element
- 30: elastisches Element
- 31: Boden
- 32: Anschlagflächen
- 33: Anschlagflächen
- 34: Mittelpunkt
- 35: Anlage
- 36: U-förmiges Element
- 37: Steg
- 38: Ausnehmungen
- 39: elastische Elemente
- 40: Teil

## Patentansprüche

1. Antrieb für eine Mischtrommel, welcher einerseits mit einer Mischtrommel (1) verbindbar ist, um die Mischtrommel (1) im Sinne einer Drehbewegung anzutreiben und eine Lagerung (14) zur Aufnahme von Gewichtskräften der Mischfrommel (1) zu bilden, und andererseits mit einem Sockel (5) in Verbindung brigbar ist, über welchen sich die Gewichtskraft abstützt, mit einem mit dem Antrieb verbindbaren Gehäuse (11) und mit Mittel, weiche eine Bewegung zwischen dem Sockel (5) und dem Antrieb (4) ermöglichen, **dadurch gekennzeichnet, dass** diese Mittel elastische Elemente (39) aufweisen, durch deren Verformung die Bewegung ermöglicht wird, wobei das Gegäuse (11) mit radialen Laschen (27) ausgebildet ist, welche mit Begrenzungsmitteln (40) U-förmige Elemente (36) bilden, vorsehen welchem die elastischen Elemente (39) angeordnet sind, wobei die elastischen Elemente (39) durch ein mit dem sockel (5) verbindbares Bauteil (18, 37) unterbrochen sind.

2. Antrieb für eine Mischtrommel nach Anspruch 1, **dadurch gekennzeichnet, dass** das elastische Element (39) zusätzliche Metallschichten aufweist.

3. Antrieb für eine Mischtrommel nach Anspruch 1, **dadurch gekennzeichnet, dass** durch das U-förmige Element (36) die elastischen Elemente (39) elastisch im Sinne einer Vorspannung in diesem Element angeordnet sind.

4. Antrieb für eine Mischtrommel nach Anspruch 1, **dadurch gekennzeichnet, dass** das Bauteil (18), welches die elastischen Elemente (39) unterbricht, kreisförmige Ausnehmungen (38) aufweist, in welchen die elastischen Elemente (39) angeordnet sind.

5. Antrieb für eine Mischtrommel nach Anspruch 4, **dadurch gekennzeichnet, dass** die elastischen Elemente (39), welche in den Ausnehmungen (38) angeordnet sind, wechselsinnig mit Metallelementen geschichtet sind.

6. Antrieb für eine Mischtrommel nach Anspruch 1, **dadurch gekennzeichnet, dass** das Bauteil (18), welches die elastischen Elemente (39) unterbricht, mit dem Sockel (5) ortsfest verbunden ist.

7. Antrieb für eine Mischtrommel nach Anspruch 1, **dadurch gekennzeichnet, dass** der Antrieb (4) ein Untersetzungsgetriebe (9) aufweist, welches mindestens eine Planetenstufe beinhaltet, dessen äußeres Zentralrad (12) den Abtrieb bildet, und dessen inneres Zentralrad (8) angetrieben wird.

8. Antrieb für eine Mischtrommel nach Anspruch 7, **dadurch gekennzeichnet, dass** die elastischen Elemente (39), welche in den Ausnehmungen (38) angeordnet sind, wechselsinnig mit Metallelementen geschichtet sind.

9. Antrieb für eine Mischtrommel nach Anspruch 5, **dadurch gekennzeichnet, dass** das Bauteil (18), welches die elastischen Elemente (39) unterbricht, mit dem Sockel (5) ortsfest verbunden ist.

10. Antrieb für eine Mischtrommel nach einem der vorhergehenden Ansprüche, **dadurch gekennzeichnet, dass** der Antrieb (4) ein Untersetzungsgetriebe (9) aufweist, welches mindestens eine Planetenstufe beinhaltet, dessen äußeres Zentralrad (12) den Abtrieb bildet, und dessen inneres Zentralrad (8) angetrieben wird.

## Claims

1. Drive for a mixing drum, said drive being connectable on one side to a mixing drum (1) in order to drive the mixing drum (1) in a rotary movement and to form a bearing arrangement (14) for absorbing weight forces of the mixing drum (1), and being connectable on the other side to a base (5), via which the weight force is supported, having a housing (11) that is connectable to the drive and having means which enable a movement between the base (5) and the drive (4), **characterized in that** these means have elastic elements (39), the deformation of which enables the movement, wherein the housing (11) is formed with radial tabs (27) which form, with boundary means (40), U-shaped elements (36) between which the elastic elements (39) are arranged, wherein the elastic elements (39) are interrupted by a component (18, 37) that is connectable to the base (5).

2. Drive for a mixing drum according to Claim 1, **characterized in that** the elastic element (39) has additional metal layers.

3. Drive for a mixing drum according to Claim 1, **characterized in that** by way of the U-shaped element (36) the elastic elements (39) are arranged in this element in an elastic manner under pretensioning.

4. Drive for a mixing drum according to Claim 1, **characterized in that** the component (18) which interrupts the elastic elements (39) has circular cutouts (38) in which the elastic elements (39) are arranged.

5. Drive for a mixing drum according to Claim 4, **characterized in that** the elastic elements (39) which are arranged in the cutouts (38) are layered in alternation with metal elements.

6. Drive for a mixing drum according to Claim 1, **characterized in that** the component (18) which interrupts the elastic elements (39) is connected in a stationary manner to the base (5).

7. Drive for a mixing drum according to Claim 1, **characterized in that** the drive (4) has a reduction gear (9) which contains at least one planetary gear stage, the outer central gear (12) of which forms the drive output, and the inner central gear (8) of which is driven.

8. Drive for a mixing drum according to Claim 7, **characterized in that** the elastic elements (39) which are arranged in the cutouts (38) are layered in alternation with metal elements.

9. Drive for a mixing drum according to Claim 5, **characterized in that** the component (18) which interrupts the elastic elements (39) is connected in a stationary manner to the base (5).

10. Drive for a mixing drum according to one of the preceding claims, **characterized in that** the drive (4) has a reduction gear (9) which contains at least one planetary gear stage, the outer central gear (12) of which forms the drive output, and the inner central gear (8) of which is driven.

## Revendications

1. Entraînement pour un tambour mélangeur, qui peut être connecté d'une part à un tambour mélangeur (1) pour entraîner le tambour mélangeur (1) dans le sens d'un mouvement de rotation et pour former un support (14) pour recevoir des forces pondérales du tambour mélangeur (1), et qui peut être amené en liaison d'autre part avec un socle (5), sur lequel s'appuie la force pondérale, avec un boîtier (11) pouvant être connecté à l'entraînement, avec des moyens qui permettent un déplacement entre le socle (5) et l'entraînement (4), **caractérisé en ce que** ces moyens présentent des éléments élastiques (39) dont la déformation permet de produire le déplacement, le boîtier (11) étant réalisé avec des pattes radiales (27) qui forment avec des moyens de limitation (40) des éléments en forme de U (36) entre lesquels sont disposés les éléments élastiques (39), les éléments élastiques (39) étant interrompus par un composant (18, 37) pouvant être connecté au socle (5).

2. Entraînement pour un tambour mélangeur selon la revendication 1, **caractérisé en ce que** l'élément élastique (39) présente des couches métalliques supplémentaires.

3. Entraînement pour un tambour mélangeur selon la revendication 1, **caractérisé en ce que** les éléments élastiques (39) sont disposés élastiquement par l'élément en forme de U (36) dans l'optique d'une précontrainte dans cet élément.

4. Entraînement pour un tambour mélangeur selon la revendication 1, **caractérisé en ce que** le composant (18), qui interrompt les éléments élastiques (39), présente des évidements circulaires (38) dans lesquels sont disposés les éléments élastiques (39).

5. Entraînement pour un tambour mélangeur selon la revendication 4, **caractérisé en ce que** les éléments élastiques (39) qui sont disposés dans les évidements (38) sont revêtus en alternance d'éléments métalliques.

6. Entraînement pour un tambour mélangeur selon la revendication 1, **caractérisé en ce que** le composant (18) qui interrompt les éléments élastiques (39) est connecté fixement au socle (5).

7. Entraînement pour un tambour mélangeur selon la revendication 1, **caractérisé en ce que** l'entraînement (4) présente un réducteur (9) qui contient au moins un étage planétaire dont le pignon central extérieur (12) constitue la prise de force, et dont le pignon central intérieur (8) est entraîné.

8. Entraînement pour un tambour mélangeur selon la revendication 7, **caractérisé en ce que** les éléments élastiques (39) qui sont disposés dans les évidements (38), sont revêtus en alternance avec des éléments métalliques.

9. Entraînement pour un tambour mélangeur selon la revendication 5, **caractérisé en ce que** le composant (18) qui interrompt les éléments élastiques (39), est connecté fixement au socle (5).

10. Entraînement pour un tambour mélangeur selon l'une quelconque des revendications précédentes, **caractérisé en ce que** l'entraînement (4) présente un réducteur (9) qui contient au moins un étage planétaire dont le pignon central extérieur (12) constitue la prise de force, et dont le pignon central intérieur (8) est entraîné.
